# EUROPÄISCHE PATENTSCHRIFT

(11) **EP 1 029 834 B1**
(45) Veröffentlichungstag und Bekanntmachung des Hinweises auf die Patenterteilung: **09.10.2002**
(21) Anmeldenummer: 00102306.8
(22) Anmeldetag: 03.02.2000
(51) Int. Cl.: C04B 22/00, C04B 28/14

(54) **Borverbindung enthaltende Gipsfaserplatte**
Fiber-reinforced gypsum board containing boron compound
Plaque de gypse renforcée de fibres contenant un composé du bore

(30) Priorität: 17.02.1999 DE 19906764
(43) Veröffentlichungstag der Anmeldung: 23.08.2000
(73) Patentinhaber: Rigips GmbH, D-40549 Düsseldorf (DE)
(72) Erfinder: Hilscher, Gerald, 31812 Bad Pyrmont (DE); Fischer, Markus Dr., 28844 Weyhe-Lahausen (DE); Spickermann, Winfried Dr., 37619 Bodenwerder-Rühle (DE)
(74) Vertreter: Minderop, Ralph H., Dr. rer. nat.

(56) Entgegenhaltungen:
- EP-A- 0 196 553
- EP-A- 0 258 064
- WO-A-93/01932
- DE-A- 4 227 920
- US-A- 3 190 787
- DATABASE WPI Section Ch, Week 198451 Derwent Publications Ltd., London, GB; Class F09, AN 1984-316277 XP002136399 & JP 59 199585 A (MITSUI TOATSU CHEM INC), 12. November 1984 (1984-11-12)

## Beschreibung

Die Erfindung betrifft Gipsfaserplatten mit einer verringerten Kohlenmonoxid-Emission im Brandfall, verbesserten mechanischen Eigenschaften und erhöhter Resistenz gegen Schimmelbefall, ein Verfahren zu deren Herstellung sowie die Verwendung von Borverbindungen zur Verringerung der Kohlenmonoxid-Emission von Gipsplatten im Brandfall.

Die Verwendung von Borverbindungen als flammhemmende Mittel ist beispielsweise aus der EP 563 536 A bekannt, die ein Isoliermaterial aus Cellulosefasern betrifft, welche mit einer Borsäuresalzlösung behandelt wurden. Nach der Behandlung der Fasern erfolgt die Verpressung zu einer Platte, die als Isoliermaterial im Hinblick auf Wärme und Schall einsetzbar ist. Die US 3 453 160 offenbart eine Gipskartonplatte oder Gipsbauplatte, die 4 bis 10 Gew.% Borsäure, ausgedrückt als B₂O₃ und bezogen auf die Masse aus Borsäure und Gipskristallen, enthält. Es wird vorgeschlagen, diese Gipsbauplatte zur Absorption von Neutronen zu verwenden. Aus der JP 5-9 199 585 ist eine Gipskartonplatte bekannt, deren Papierdeckschichten vor der Plattenherstellung mit Borsäure oder einem Borsäuresalz behandelt worden sind. Alternativ wird vorgeschlagen, schon die Fasern der Papierpulpe mit den zuvor genannten Verbindungen zu behandeln. Durch diese Behandlung wird die Feuerbeständigkeit erhöht.

Die DE 42 27 920 A1 beschreibt einen plattenförmigen wärmedämmenden Baustoff der Baustoffklasse B2 und somit einen normal entflammbaren Baustoff, der Gips als Bindemittel und Borax als Mittel zur Fäulnishemmung enthält. Borax ist in der wäßrigen Masse in einer Menge von etwa 3 Gew.% enthalten.

Die EP 33 391 B1 beschreibt ein Verfahren zum Herstellen schwer entflammbarer oder nicht brennbarer Produkte auf der Basis faseriger Materialien, in dem die faserigen Materialien zu einem wäßrigen Brei aufbereitet werden, dem Brei calciumhaltige Borminerale und Schwefelsäure zugemischt werden und das so erhaltene Gemisch nach einer Reifezeit zur Umwandlung des calciumhaltigen Borminerals in Borsäure und Calciumsulfat Vliesbildungs- und Faserentwässerungsmaschinen zugeleitet, entwässert und getrocknet wird. Die hier beschriebenen Gipsplatten besitzen einen Borgehalt von mehr als 10 Gew.%.

Die EP 258 064 A2 beschreibt eine hochfeste feuerwiderstandsfähige Zusammensetzung zur Herstellung der Kernmatrix einer Gipsfaserplatte. Diese Platte enthält 1 bis 5 Gew.% Fasern, 1 bis 25 Gew.% eines feuerhemmenden Mittels, jeweils bezogen auf das Calciumsulfat-Halbhydrat, ein die Festigkeit erhöhendes Mittel und Wasser. Feuerhemmende Mittel sind Borverbindungen wie Borsäure, Borsäureanhydrid, wasserfreies Natriumborat oder Natriumtetraboratdekahydrat. Dieser Offenbarung ist ferner zu entnehmen, daß die Kombination von Borsäure und natürlichen Fasern bei der Einwirkung von Feuer eine größere Festigkeit liefert als Glasfaser. Es ist folglich bekannt, daß Borsäure auch die Feuerfestigkeit erhöht.

Eine wichtige Anforderung an Gipsfaserplatten besteht darin, daß sie im Brandfall eine möglichst geringe Kohlenmonoxid-Emission zeigen sollen. Bei der sogenannten inhalationstoxikologischen Prüfung nach DIN 4102 und DIN 53 436 stellte sich bei einer Gipsfaserplatte mit einer Dicke von 10 mm und einer Faseranteil von etwa 11% nach einstündiger Prüfung eine Kohlenmonoxid(CO)-Konzentration in den Schwelgasen von 1200ppm ein.

Die US 3 190 787 betrifft Gipskartonplatten mit einem verbesserten Bindungsverhalten zwischen Kartonlage und Gipskern und besseren Nageleigenschaften, wenn der Gipskern wenigstens 0,6 Gew.% Borsäure enthält. Diese Platte enthält einen Faseranteil von weniger als 2%.

Der Erfindung liegt die Aufgabe zugrunde, eine Gipsfaserplatte bereitzustellen, die in die Baustoffklasse A2 klassifiziert werden kann und die über verbesserte mechanische Eigenschaften, insbesondere eine verbesserte Biegezugfestigkeit und einen verbesserten Elastizitäts(E)-Modul verfügt.

Gelöst wird diese Aufgabe durch eine Gipsfaserplatte mit einer Fasermenge von 5 bis 45 Gew.%, bezogen auf das Gewicht der Platte, enthaltend mindestens eine Borverbindung in einer Konzentration von 0,1 bis 0,6 Gew.%, bezogen auf das Gewicht der Platte.

Wesentliches Merkmal für die Erfindung ist die Einstellung der zuvor genannten Konzentration der Borverbindung. Die Prüfung der erfindungsgemäßen Platten nach DIN 53436 zeigt, daß diese in die Baustoffklasse A2 nach DIN 4102 einzuordnen sind. Wenn auch in bezug auf die Verringerung der CO-Emission keine Beschränkung der Konzentration der Borverbindung in der Gipsfaserplatte erforderlich ist, so hat sich überraschend herausgestellt, daß sich die Biegezugfestigkeit und das E-Modul bei einer Konzentration der Borverbindung von mehr als 0,6 Gew.% in der Platte wieder verschlechtern.

Ein weiterer Vorteil der erfindungsgemäßen Platte besteht in der dem Schimmelbefall vorbeugenden Wirkung der Borverbindung, die überraschender Weise bereits bei der niedrigen angegebenen Konzentration gegeben ist. Wegen des relativ hohen Anteils an organischen Fasern, beispielsweise Cellulosefasern, besteht die Gefahr, daß Gipsfaserplatten unter konstanten feuchtwarmen Bedingungen von Schimmel befallen werden. Durch den Einsatz von mindestens 0,1 Gew.% Borverbindung, bezogen auf die Masse der Gipsfaserplatte, wird dem Schimmelbefall vorgebeugt.

Gegenstand der Erfindung ist ferner die Verwendung von Borverbindungen, ausgewählt aus Boroxid, Borsäure, Borat, insbesondere Alkaliborat, und deren Mischungen in Gipsplatten zur Verringerung der Kohlenmonoxid-Emission von Gipsplatten im Brandfall.

Erfindungsgemäße eine Borverbindung enthaltende Gipsfaserplatten sind einschichtige oder mehrschichtige Platten. Mehrschichtige Platten enthalten beispielsweise eine Schicht geringerer Dichte und mindestens zwei Schichten höherer Dichte. Mehrschichtige Platten können eine Sandwichstruktur aufweisen mit einer Kernschicht geringerer Dichte und jeweils einer Deckschicht mit höherer Dichte als der Kernschicht auf beiden Seiten der Kernschicht.

Erfindungsgemäß geeignete Borverbindungen sind beispielsweise Boroxide, Borsäure und Borate. Es können auch Gemische dieser Verbindungen eingesetzt werden, um die erfindungsgemäß erwünschten Eigenschaften einzustellen. Beispiele geeigneter Borate sind Alkaliborate wie Borax, insbesondere Kristallwasser enthaltendes Natriumborat.

Als Gipse zur Gipsfaserplattenherstellung können grundsätzlich alle abbindefähigen Gipse eingesetzt werden, β-Halbhydratgipse sind besonders geeignet. Es können auch Gemische von β-Halbhydratgipsen und anderen abbindefähigen Gipsen eingesetzt werden.

Als Fasern kommen organische Fasern, hauptsächlich Cellulosefasern, in Betracht. Bevorzugt werden Cellulosefasern in Form von Holzabfällen, Papierabfällen und Pappeabfällen. Besonders bevorzugt sind Altpapierfasern. Die Fasermenge in der Platte beträgt 5 bis 45 Gew.%, besonders bevorzugt 8 bis 20% Gew.%, bezogen auf das Gewicht der fertigen Gipsfaserplatte. In mehrschichtigen Platten können die Faserkonzentrationen in den einzelnen Schichten verschieden sein. Auch ist es denkbar, daß eine Schicht nahezu keine Fasern enthält.

Zur Modifizierung des Gewichts oder der Dichte der Gipsfaserplatte können sogenannte Leichtzuschlagstoffe der Herstellungsmasse zugesetzt werden und in der Platte enthalten sein. In mehrschichtigen Gipsfaserplatten wird vorzugsweise die Kernschicht einen Leichtzuschlagstoff enthalten. Geeignete Leichtzuschlagstoffe sind Perlite, Schaumglasgranulat oder geblähter Vermiculit. Die Konzentration der Leichtzuschlagstoffe wird in Abhängigkeit vom gewünschten Gewicht und bei einschichtigen Platten von deren nach Zugabe von Leichtzuschlagstoff erhaltenen Oberflächeneigenschaften gewählt. Sie kann beispielsweise in der Mittelschicht einer dreischichtigen Platte 2 bis 50 Gew.%, insbesondere etwa 30 Gew.%, bezogen auf das Gewicht der Mittelschicht betragen.

Neben den Hauptbestandteilen Gips, Fasern, Wasser und gegebenenfalls Leichtzuschlagstoffen enthält die Gipsfaserplatte übliche Additive. Solche Additive sind beispielsweise Abbindebeschleuniger, Abbindeverzögerer, Benetzungsmittel, Mittel, die die Verklumpung der Fasern verhindern wie Kalk, Zement und Schönungsmittel wie Bentonit.

Die Herstellung der erfindungsgemäßen Gipsfaserplatten kann nach dem sogenannten Naßverfahren, dem Trockenverfahren oder Halbtrockenverfahren erfolgen. Alle Verfahren sind in der einschlägigen Literatur beschrieben und dem Fachmann bekannt. Besonders empfehlenswert ist das in der WO 93/01932 beschriebene Halbtrockenverfahren, auf deren Offenbarung hier beispielhaft Bezug genommen wird.

Zunächst wird ein Teil oder die Gesamtheit der Cellulosefasern in einer Mischstufe mit Anmachwasser angefeuchtet, wobei feuchte lose Fasern erhalten werden. Die Fasern können eine Teilchengröße von weniger als 2000µm aufweisen. Zur Verhinderung des Aneinanderbackens von Fasern kann den Fasern Calciumoxid (CaO) zugemischt werden. Das Zumischen von CaO erfolgt beim Vermahlen des trockenen Papiers. CaO kann auch im Gemisch mit Natriumsilicat und den weiteren zuvor genannten Mitteln zur Verhinderung des Verklumpens der Fasern zugesetzt werden. Über das Anmachwasser wird die Borverbindung zugesetzt, wobei die Konzentration der Borverbindung im Anmachwasser 0,5 bis 5 Gew.% betragen kann. Ein Teil des Anmachwassers kann auch dem Leichtzuschlagstoff zugesetzt werden.

Mit dem trockenen calcinierten Gips können die angefeuchteten Fasern während des Transports zum Formband vermischt werden. Nach Aufgabe auf das Formband kann die dabei erhaltene Matte sofort verpreßt und entgast werden. Anschließend kann in einer Nachbefeuchtungsstufe weiteres Wasser auf die verpreßte Matte aufgegeben werden. Dieses Wasser kann einen Abbindebeschleuniger enthalten. Das Abbinden des Gipses und der größte Teil der Hydratation erfolgt im wesentlichen innerhalb weniger Minuten während die Matte kontinuierlich verpreßt wird. Es erfolgt die Trocknung der Gipsfaserplatte und anschließend wird die Platte auf das gewünschte Maß gesägt.

Das folgende Beispiel dient der weiteren Erläuterung der Erfindung.

### Beispiel

Eine nach dem oben beschriebenen Verfahren hergestellte Gipsfaserplatte mit einer Faserkonzentration von etwa 11 Gew.% und einem Natriumtetraborat-Dekahydrat in einer Konzentration von etwa 0,3 Gew.% besitzt eine Dicke von etwa 10mm. Eine solche Platte wurde verglichen bezüglich der CO-Emission, der Biegezugfestigkeit, dem E-Modul und dem Schimmelbefall mit einer entsprechenden Platte ohne Zusatz einer Borverbindung. Die Bestimmung der CO-Emission erfolgte nach DIN 4102 und DIN 53 436. Biegezugfestigkeit und E-Modul wurden auf der Grundlage der DIN 18 180 ermittelt. Zur Ermittlung der Widerstandsfähigkeit gegenüber Schimmelbefall wurden die Platten über einen längeren Zeitraum bei 25 bis 28 °C und 90 bis 100% relativer Feuchte ohne Luftaustausch gehalten. Die ermittelten Ergebnisse sind in der folgenden Tabelle wiedergegeben.

| | Erfindungsgemäß | ohne Borverb. |
|---|---|---|
| CO-Emission [ppm] | 400 | 1200 |
| Biegezugfestigkeit [N/mm²] | 7,9 | 6,9 |
| Elastizitätsmodul [N/mm²] | 6500 | 4500 |
| Schimmelbefall | -- | nach 2 Wochen |

Aus den dargestellten Ergebnissen wird deutlich, daß im angegebenen Fall die CO-Emission nach einer Stunde Schwelbrand durch Zusatz der Borverbindung auf ein Drittel verringert wurde. Die Biegezugfestigkeit wird um etwa 15% verbessert. Der E-Modul steigt sogar um 44% an. Ferner wurde festgestellt, daß bei einer Konzentration der Borverbindung von 0,6 Gew.%, also oberhalb des Optimums, die Biegefestigkeit nur noch auf 7,5 N/mm² und der E-Modul nur noch auf 5500 N/mm² gesteigert werden konnte. Bei der Überprüfung des Schimmelbefalls konnte an der erfindungsgemäßen Platte auch sechs Wochen noch kein Befall festgestellt werden.

## Patentansprüche

1. Gipsfaserplatte mit einer Fasermenge von 5 bis 45 Gew.%, bezogen auf das Gewicht der Platte, enthaltend mindestens eine Borverbindung in einer Konzentration von 0,1 bis 0,6 Gew.%, bezogen auf das Gewicht der Platte.

2. Gipsfaserplatte nach Anspruch 1, **dadurch gekennzeichnet, daß** die Borverbindung ein Boroxid, eine Borsäure und/oder ein Borat ist.

3. Gipsfaserplatte nach Anspruch 2, **dadurch gekennzeichnet, daß** das Borat ein Alkalimetallborat ist.

4. Gipsfaserplatte nach Anspruch 3, **dadurch gekennzeichnet, daß** das Alkalimetallborat ein Kristallwasser enthaltendes Natriumborat ist.

5. Gipsfaserplatte nach einem der Ansprüche 1 bis 4, **dadurch gekennzeichnet, daß** die Platte mehrschichtig aufgebaut ist und sich die Schichten der Platte durch unterschiedliche Dichten und/oder Faserkonzentrationen unterscheiden.

6. Gipsfaserplatte nach Anspruch 5, **dadurch gekennzeichnet, daß** die Gipsfaserplatte aus drei Schichten aufgebaut ist und die mittlere Schicht eine geringere Dichte als die äußeren Schichten aufweist.

7. Verfahren zur Herstellung einer Gipsfaserplatte, in dem ein abbindefähiger Gips, Fasern, Wasser, gegebenenfalls Leichtzuschlagstoffe und übliche Additive miteinander vermischt werden, **dadurch gekennzeichnet, daß** man dem Anmachwasser mindestens eine Borverbindung in einer Konzentration von 0,5 bis 3 Gew.%, bezogen auf die Masse des Anmachwassers, zusetzt.

8. Verfahren nach Anspruch 7, **dadurch gekennzeichnet, daß** man einen Teil des Anmachwassers den Fasern zusetzt.

9. Verfahren nach Anspruch 8, **dadurch gekennzeichnet, daß** man die Fasern mit fein zerstäubtem Anmachwasser, das die Borverbindung(en) nach den Ansprüchen 1 bis 4 enthält, besprüht.

10. Verfahren nach Anspruch 9, **dadurch gekennzeichnet, daß** man dem Anmachwasser eine oberflächenaktives Mittel zusetzt.

11. Verfahren nach 9 oder 10, **dadurch gekennzeichnet, daß** man die Masse des aufgesprühten Anmachwassers auf 60 bis 140 Gew.% der Masse der trockenen Fasern einstellt.

12. Verwendung von Borverbindungen, ausgewählt aus Boroxid, Borsäure, Borat, insbesondere Alkaliborat, und deren Mischungen in Gipsplatten zur Verringerung der Kohlenmonoxid-Emission von Gipsplatten im Brandfall.

## Claims

1. A fiber-reinforced gypsum board having a fiber content of 5 to 45 % by weight relative to the weight of the board, containing at least one boron compound in a concentration of 0.1 to 0.6 % by weight relative to the weight of the board.

2. The fiber-reinforced gypsum board according to claim 1, **characterized in that** the boron compound is a boron oxide, a boric acid and/or a borate.

3. The fiber-reinforced gypsum board according to claim 2, **characterized in that** the borate is an alkali metal borate.

4. The fiber-reinforced gypsum board according to claim 3, **characterized in that** the alkali metal borate is a sodium borate containing water of crystallization.

5. The fiber-reinforced gypsum board according to any of claims 1 to 4, **characterized in that** the board is of multilayer construction and that the layers of the board are differentiated by varying densities and/or fiber concentrations.

6. The fiber-reinforced gypsum board according to claim 5, **characterized in that** the fiber-reinforced gypsum board is constructed in three layers and that the middle layer has a lower density than the outer layers.

7. A method for producing a fiber-reinforced gypsum board in which a curable gypsum, fibers, water, lightweight aggregates as required and other normal additives are mixed together, **characterized in that** at least one boron compound is added to the mixing water in a concentration of 0.5 to 3 % by weight relative to the mass of the mixing water.

8. The method according to claim 7, **characterized in that** a portion of the mixing water is added to the fibers.

9. The method according to claim 8, **characterized in that** the fibers are sprayed with finely atomized mixing water, which contains the boron compound or compounds according to claims 1 to 4.

10. The method according to claim 9, **characterized in that** a surfactant is added to the mixing water.

11. The method according to either of claims 9 or 10, **characterized in that** the mass of the sprayed mixing water is set to between 60 and 140 % by weight of the mass of the dry fibers.

12. A use of boron compounds, selected from boron oxide, boric acid, borate, particularly alkali borate, and mixtures thereof in gypsum boards to reduce the amount of carbon monoxide emitted in the event of a fire.

## Revendications

1. Plaque de plâtre renforcée de fibres avec une quantité de fibres allant de 5 à 45% en poids, sur base du poids de la plaque, contenant au moins un composé du bore en une concentration allant de 0,1 à 0,6% en poids, sur base du poids de la plaque.

2. Plaque de plâtre renforcée de fibres suivant la revendication 1, **caractérisée en ce que** le composé du bore est un oxyde de bore, un acide borique et/ou un borate.

3. Plaque de plâtre renforcée de fibres suivant la revendication 2, **caractérisée en ce que** le borate est un borate de métal alcalin.

4. Plaque de plâtre renforcée de fibres suivant la revendication 3, **caractérisée en ce que** le borate de métal alcalin est un borate de sodium contenant de l'eau de cristallisation.

5. Plaque de plâtre renforcée de fibres suivant l'une quelconque des revendications 1 à 4, **caractérisée en ce que** la plaque est élaborée en plusieurs couches et que les couches de la plaque se différencient par différentes densités et/ou concentrations en fibres.

6. Plaque de plâtre renforcée de fibres suivant la revendication 5, **caractérisée en ce que** la plaque de plâtre renforcée de fibres est élaborée à partir de trois couches, et que le couche centrale présente une plus faible densité que les couches externes.

7. Procédé de préparation d'une plaque de plâtre renforcée de fibres, dans lequel on mélange un plâtre capable de prise, des fibres, de l'eau, le cas échéant un agrégat léger et les additifs usuels, **caractérisé en ce que** l'on ajoute à l'eau à gâcher, au moins un composé du bore en une concentration allant de 0,5 à 3% en poids, sur base de la masse de l'eau à gâcher.

8. Procédé suivant la revendication 7, **caractérisé en ce que** l'on ajoute les fibres à une partie de l'eau à gâcher.

9. Procédé suivant la revendication 8, **caractérisé en ce que** l'on pulvérise les fibres avec l'eau à gâcher finement distribuée, qui contient le composé du bore suivant les revendications 1 à 4.

10. Procédé suivant la revendication 9, **caractérisé en ce que** l'on ajoute à l'eau à gâcher, un agent tensioactif.

11. Procédé suivant la revendication 9 ou 10, **caractérisé en ce que** l'on ajuste la masse de l'eau à gâcher pulvérisée à 60 à 140% en poids de la masse des fibres sèches.

12. Utilisation de composés du bore, choisis parmi l'oxyde de bore, l'acide borique, un borate, en particulier un borate alcalin, et leurs mélanges, dans des plaques de plâtre pour diminuer l'émission de monoxyde de carbone des plaque de plâtre en cas d'incendie.
